# EUROPÄISCHE PATENTSCHRIFT

(11) **EP 3 807 708 B1**
(45) Veröffentlichungstag und Bekanntmachung des Hinweises auf die Patenterteilung: **06.08.2025**
(21) Anmeldenummer: 19731930.4
(22) Anmeldetag: 13.06.2019
(51) Int. Cl.: G02B 27/01

(54) **GERÄT ZUM ERZEUGEN EINES VIRTUELLEN BILDES MIT VARIABLER PROJEKTIONSDISTANZ**
APPARATUS FOR GENERATING A VIRTUAL IMAGE HAVING A VARIABLE PROJECTION DISTANCE
APPAREIL DE GÉNÉRATION D'UNE IMAGE VIRTUELLE À DISTANCE DE PROJECTION VARIABLE

(30) Priorität: 15.06.2018 DE 102018209634
(43) Veröffentlichungstag der Anmeldung: 21.04.2021
(73) Patentinhaber: Continental Automotive Technologies GmbH, 30175 Hannover (DE)
(72) Erfinder: VON SPIEGEL, Wolff, 65824 Schwalbach a. Ts. (DE); RICHTER, Björn Pablo, 65824 Schwalbach a. Ts. (DE); SCHEFFLER-JUSCHTSCHENKO, Willi, 65824 Schwalbach a. Ts. (DE)
(74) Vertreter: Aumovio Corporation
(86) Internationale Anmeldenummer: PCT/EP2019/065611
(87) Internationale Veröffentlichungsnummer: WO 2019/238889

(56) Entgegenhaltungen:
- WO-A1-00/07061
- WO-A1-2017/060665
- WO-A2-2016/113533
- US-A1- 2006 132 914

## Beschreibung

Die vorliegende Erfindung betrifft ein Gerät zum Generieren eines virtuellen Bildes.

Unter einem Head-Up-Display, auch als HUD bezeichnet, wird ein Anzeigesystem verstanden, bei dem der Betrachter seine Blickrichtung beibehalten kann, da die darzustellenden Inhalte in sein Sichtfeld eingeblendet werden. Während derartige Systeme aufgrund ihrer Komplexität und Kosten ursprünglich vorwiegend im Bereich der Luftfahrt Verwendung fanden, werden sie inzwischen auch im Automobilbereich in Großserie verbaut.

Head-Up-Displays bestehen im Allgemeinen aus einem Bildgenerator, einer Optikeinheit und einer Spiegeleinheit. Der Bildgenerator erzeugt das Bild. Die Optikeinheit leitet das Bild auf die Spiegeleinheit. Der Bildgenerator wird oft auch als bildgebende Einheit oder PGU (Picture Generating Unit) bezeichnet. Die Spiegeleinheit ist eine teilweise spiegelnde, lichtdurchlässige Scheibe. Der Betrachter sieht also die vom Bildgenerator dargestellten Inhalte als virtuelles Bild und gleichzeitig die reale Welt hinter der Scheibe. Als Spiegeleinheit dient im Automobilbereich oftmals die Windschutzscheibe, deren gekrümmte Form bei der Darstellung berücksichtigt werden muss. Durch das Zusammenwirken von Optikeinheit und Spiegeleinheit ist das virtuelle Bild eine vergrößerte Darstellung des vom Bildgenerator erzeugten Bildes.

Der Betrachter kann das virtuelle Bild nur aus der Position der sogenannten Eyebox betrachten. Als Eyebox wird ein Bereich bezeichnet, dessen Höhe und Breite einem theoretischen Sichtfenster entspricht. So lange sich ein Auge des Betrachters innerhalb der Eyebox befindet, sind alle Elemente des virtuellen Bildes für das Auge sichtbar. Befindet sich das Auge hingegen außerhalb der Eyebox, so ist das virtuelle Bild für den Betrachter nur noch teilweise oder gar nicht sichtbar. Je größer die Eyebox ist, desto weniger eingeschränkt ist der Betrachter somit bei der Wahl seiner Sitzposition.

Die Größe der Eyebox herkömmlicher Head-Up-Displays wird durch die Größe der Optikeinheit begrenzt. Ein Ansatz zur Vergrößerung der Eyebox besteht darin, das von der bildgebenden Einheit kommende Licht in einen Lichtwellenleiter einzukoppeln. Das in den Lichtwellenleiter eingekoppelte Licht, das die Bildinformation trägt, wird an dessen Grenzflächen totalreflektiert und wird somit innerhalb des Lichtwellenleiters geleitet. Zusätzlich wird an einer Vielzahl von Positionen entlang der Ausbreitungsrichtung jeweils ein Teil des Lichts ausgekoppelt, so dass die Bildinformation über die Fläche des Lichtwellenleiters verteilt ausgegeben wird. Durch den Lichtwellenleiter erfolgt auf diese Weise eine Aufweitung der Austrittspupille. Die effektive Austrittspupille setzt sich hier aus Bildern der Apertur des Bilderzeugungssystems zusammen.

Vor diesem Hintergrund beschreibt die US 2016/0124223 A1 eine Anzeigevorrichtung für virtuelle Bilder. Die Anzeigevorrichtung umfasst einen Lichtwellenleiter, der bewirkt, dass von einer bildgebenden Einheit kommendes Licht, das durch eine erste Lichteinfallsfläche einfällt, wiederholt einer internen Reflexion unterzogen wird, um sich in einer ersten Richtung von der ersten Lichteinfallsfläche weg zu bewegen. Der Lichtwellenleiter bewirkt zudem, dass ein Teil des im Lichtwellenleiter geführten Lichts durch Bereiche einer ersten Lichtaustrittsfläche, die sich in der ersten Richtung erstreckt, nach außen austritt. Die Anzeigevorrichtung umfasst weiterhin ein erstes lichteinfallseitiges Beugungsgitter, das auftreffendes Licht beugt, um zu bewirken, dass das gebeugte Licht in den Lichtwellenleiter eintritt, und ein erstes lichtausfallendes Beugungsgitter, das vom Lichtwellenleiter einfallendes Licht beugt.

Mit der stetigen Weiterentwicklung von Virtual & Augmented Reality-Technologien und -Anwendungen finden diese auch Einzug in den Automobilbereich. Bei Augmented Reality (AR), auf Deutsch "erweiterte Realität", handelt es sich um die Anreicherung der realen Welt durch virtuelle Elemente, die im dreidimensionalen Raum ortskorrekt registriert sind. In der Fachwelt hat sich im deutschsprachigen Raum der Ausdruck "Augmented Reality" gegenüber dem Ausdruck "erweiterte Realität" durchgesetzt hat. Im Folgenden wird daher der Ausdruck "Augmented Reality" benutzt.

Herkömmliche Head-Up-Displays haben eine Fläche, in der das virtuelle Bild zu liegen scheint. Die Projektionsdistanz ist typischerweise so gewählt, dass die Anzeigen etwas oberhalb der Motorhaube des Fahrzeugs erscheinen, in dem das Head-Up-Display verbaut ist. Dort ragen die Anzeigen nicht in andere Objekte und sind gut ablesbar.

Für Augmented-Reality-Anwendungen bietet sich die Nutzung von Head-Up-Displays an, die auf der beschriebenen Lichtwellenleitertechnologie beruhen. Durch die größere Eyebox ist der Bereich der realen Welt, der durch virtuelle Elemente angereichert werden kann, ebenfalls deutlich größer. Ein Head-Up-Display mit Lichtwellenleiter realisiert ebenfalls eine einzelne Projektionsdistanz, wobei für Augmented-Reality-Anwendungen eine größere Projektionsdistanz sinnvoll ist. Diese eignet sich aber weniger für klassische Anzeigen, die eher im näheren Bereich bevorzugt werden.

WO 2017/060665 A1 beschreibt eine optische Anzeige mit einem ersten Wellenleiter, der eine erste Oberfläche und eine zweite Oberfläche umfasst, einem Eingangskoppler, einem Faltgitter und einem Ausgangsgitter. Der Eingangskoppler empfängt kollimiertes Licht der ersten Wellenlänge von einem Eingangsbildknoten und bewirkt, dass sich das Licht innerhalb des ersten Wellenleiters durch Totalreflexion zwischen der ersten Oberfläche und der zweiten Oberfläche zum Faltgitter bewegt. Das Faltgitter sorgt für eine Pupillenexpansion in einer ersten Richtung und lenkt das Licht über eine Totalreflexion zwischen der ersten Oberfläche und der zweiten Oberfläche zum Ausgangsgitter. Das Ausgangsgitter sorgt für eine Pupillenexpansion in einer anderen Richtung als der ersten Richtung und bewirkt, dass das Licht den ersten Wellenleiter von der ersten Oberfläche oder der zweiten Oberfläche verlässt. Auf dem Wellenleiter kann ein schaltbares fokussierendes Element zum Erzeugen mehrerer Bildebenen angeordnet sein.

US 2006/0132914 A1 beschreibt eine Anzeigevorrichtung zum Einblenden eines virtuellen Bildes in eine Szene. Die Anzeigevorrichtung umfasst einen Lichtleiter, Transformationselemente für einen Eingangsstrahl und einen Ausgangsstrahl und einen Reflektor für ein Bild der Szene. Die Transformationselemente sind jeweils mit einem entsprechenden Lichtleiter versehen. Der Eingangsstrahl durchläuft eine optische Anordnung, mit der ein Fokuspunkt für ein Ausgangsbild variiert werden kann.

WO 2016/113533 A2 beschreibt eine Lichtfeldanzeige mit mindestens einer Laserlichtquelle, einem optischen Modulator zum Modulieren von Licht der Laserlichtquelle mit Videoinformation, einem Strahlfokusmodulator, einer Anordnung von Strahlabtastelementen, einem elektrisch steuerbaren Strahlfokusmodulator und mindestens einem Wellenleiter. Der Wellenleiter umfasst ein transparentes Substrat, ein Eingangsgitter und ein Ausgangsgitter zum Extrahieren von Licht aus dem Wellenleiter. Im Strahlengang ist ein Strahlfokusmodulator angeordnet.

WO 00/07061 A1 beschreibt ein 3D-Projektionssystem, umfassend eine zweidimensionale Anzeige und ein schaltbares holographisches optisches System. Die zweidimensionale Anzeige ist so konfiguriert, dass sie nacheinander eine Reihe von Querschnitten eines dreidimensionalen Bildes anzeigt. Das schaltbare holographische optische System ist so konfiguriert, dass es die zweidimensionale Anzeige auf eine Folge von Bildebenen in einer Vielzahl von Abständen von der zweidimensionalen Anzeige fokussiert.

Es ist eine Aufgabe der vorliegenden Erfindung, ein verbessertes Gerät zum Generieren eines virtuellen Bildes vorzuschlagen, das eine variable Projektionsdistanz ermöglicht.

Diese Aufgabe wird durch ein Gerät mit den Merkmalen des Anspruchs 1 gelöst. Bevorzugte Ausgestaltungen der Erfindung sind Gegenstand der abhängigen Ansprüche.

Gemäß einem ersten Aspekt der Erfindung weist ein Gerät zum Generieren eines virtuellen Bildes auf:
- eine bildgebende Einheit zum Erzeugen eines Bildes;
- einen Lichtwellenleiter zum Aufweiten einer Austrittspupille, wobei der Lichtwellenleiter einen Auskoppelbereich aufweist; und
- ein benachbart zum Auskoppelbereich angeordnetes optisches Element zum Beeinflussen einer Projektionsdistanz für zumindest einen Teilbereich des virtuellen Bildes, wobei das optische Element zumindest zwei nebeneinander angeordnete Volumenhologramme aufweist, durch die gleichzeitig Anzeigen in einem Nahbereich und in einem Fernbereich einblendbar sind.

Bei der erfindungsgemäßen Lösung wird durch ein zusätzliches optisches Element eine variable Projektionsdistanz ermöglicht. Dadurch können Objekte für den Betrachter in unterschiedlichen Entfernungen angezeigt werden. Beispielsweise können Augmented-Reality-Konzepte mit unterschiedlich weit entfernten Bildebenen für statische und dynamische Bildinformationen realisiert werden. Ebenso können gekrümmte oder geneigte Bildebenen realisiert werden, z.B. eine Bildebene, die auf der Straßenoberfläche liegt. Vorzugsweise liegt eine erste Bildebene in einer Entfernung, in der eine stereoskopische Wahrnehmung durch den Nutzer möglich ist, während eine zweite Bildebene in einer Entfernung liegt, in der dies nicht mehr der Fall ist. Das optische Element kann beispielsweise eine diffraktive Struktur aufweisen, die auf das aus dem Auskoppelbereich austretende Licht wirkt.

Erfindungsgemäß wird durch das optische Element zumindest eine Projektionsebene im Nahbereich und eine Projektionsebene im Fernbereich realisiert. Die Projektionsebene im Nahbereich kann dabei als Anzeigeebene dienen, während die Projektionsebene im Fernbereich als Augmentierungsebene dienen kann. Durch die Möglichkeit, Anzeigen gleichzeitig in einem Nahbereich und in einem Fernbereich einblenden zu können, lassen sich die Anforderungen von klassischen Anzeigen und Augmented-Reality-Anwendungen vereinen.

Gemäß einem Aspekt der Erfindung weist das optische Element zumindest eine holographische Schicht auf. Durch eine zusätzliche holographische Schicht, die benachbart zum Auskoppelbereich angeordnet ist, kann das aus dem Auskoppelbereich austretende Licht sehr kontrolliert beeinflusst werden. Vorzugsweise ist die holographische Schicht als Transmissionsvolumenhologramm ausgestaltet.

Gemäß einem Aspekt der Erfindung ist die zumindest eine holographische Schicht schaltbar. Dazu kann die zumindest eine holographische Schicht durch Flüssigkristalle schaltbare Strukturen aufweisen. Auf diese Weise ist es möglich, die Änderung der Projektionsdistanz durch die holographische Schicht je nach Bedarf zu aktivieren oder zu deaktivieren.

Gemäß einem Aspekt der Erfindung ist die zumindest eine holographische Schicht in Abhängigkeit von einer Betrachterposition schaltbar ist. Beispielsweise kann zumindest ein streifenförmiges Volumenhologramm zwischen benachbarten Hologrammen angeordnet sein. Dieses kann in Abhängigkeit von einer Position des Betrachters geschaltet werden, insbesondere in Abhängigkeit von einer vertikalen Kopfposition. Auf diese Weise lassen sich Darstellungsfehler im Grenzbereich zwischen den benachbarten Hologrammen vermeiden, die bei einer nicht angepassten vertikalen Kopfposition des Betrachters auftreten können.

Gemäß einem Aspekt der Erfindung weist das Gerät eine Steuereinheit zum synchronisierten Ansteuern der zumindest einen holographischen Schicht und der bildgebenden Einheit auf. Durch ein zeitliches Multiplexing können so verschiedene Projektionsdistanzen realisiert werden. Alternativ kann auch zwischen verschiedenen Hologrammen mit unterschiedlichen zugehörigen Projektionsebenen umgeschaltet werden. Je nach Schaltzeiten und Reserven werden so mehrere für den Betrachter quasi gleichzeitig wahrnehmbare Bildebenen realisiert.

Vorzugsweise wird ein erfindungsgemäßes Gerät in einem Fortbewegungsmittel eingesetzt, um ein virtuelles Bild für einen Bediener des Fortbewegungsmittels zu erzeugen. Bei dem Fortbewegungsmittel kann es sich beispielsweise um ein Kraftfahrzeug oder ein Luftfahrzeug handeln. Selbstverständlich kann die erfindungsgemäße Lösung auch in anderen Umgebungen oder für andere Anwendungen genutzt werden, z.B. in Lastkraftwagen, bei in einem Helm montierten Anzeigen, in der Bahntechnik und im ÖPNV, bei Kranen und Baumaschinen, etc.

Weitere Merkmale der vorliegenden Erfindung werden aus der nachfolgenden Beschreibung und den angehängten Ansprüchen in Verbindung mit den Figuren ersichtlich.

### Figurenübersicht

- Fig. 1: zeigt schematisch ein Head-Up-Display gemäß dem Stand der Technik für ein Kraftfahrzeug;
- Fig. 2: zeigt einen Lichtwellenleiter mit zweidimensionaler Vergrößerung;
- Fig. 3: zeigt schematisch ein Head-Up-Display mit Lichtwellenleiter;
- Fig. 4: zeigt schematisch ein Head-Up-Display mit Lichtwellenleiter in einem Kraftfahrzeug;
- Fig. 5: zeigt schematisch eine erste Ausführungsform eines erfindungsgemäßen Head-Up-Displays; und
- Fig. 6: zeigt schematisch eine zweite Ausführungsform eines erfindungsgemäßen Head-Up-Displays.

### Figurenbeschreibung

Zum besseren Verständnis der Prinzipien der vorliegenden Erfindung werden nachfolgend Ausführungsformen der Erfindung anhand der Figuren detaillierter erläutert. Gleiche Bezugszeichen werden in den Figuren für gleiche oder gleichwirkende Elemente verwendet und nicht notwendigerweise zu jeder Figur erneut beschrieben. Es versteht sich, dass sich die Erfindung nicht auf die dargestellten Ausführungsformen beschränkt und dass die beschriebenen Merkmale auch kombiniert oder modifiziert werden können, ohne den Schutzbereich der Erfindung zu verlassen, wie er in den angehängten Ansprüchen definiert ist.

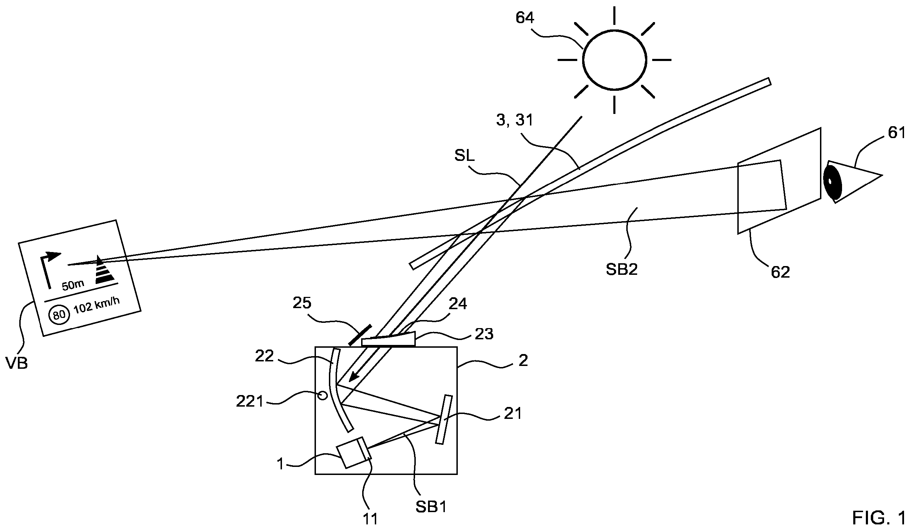

Zunächst soll anhand der Figuren 1 bis 4 der Grundgedanke eines Head-Up-Displays mit Lichtwellenleiter dargelegt werden.

Fig. 1 zeigt eine Prinzipskizze eines Head-Up-Displays gemäß dem Stand der Technik für ein Kraftfahrzeug. Das Head-Up-Display weist einen Bildgenerator 1, eine Optikeinheit 2 und eine Spiegeleinheit 3 auf. Von einem Anzeigeelement 11 geht ein Strahlenbündel SB1 aus, welches von einem Faltspiegel 21 auf einen gekrümmten Spiegel 22 reflektiert wird, der es Richtung Spiegeleinheit 3 reflektiert. Die Spiegeleinheit 3 ist hier als Windschutzscheibe 31 eines Kraftfahrzeugs dargestellt. Von dort gelangt das Strahlenbündel SB2 in Richtung eines Auges 61 eines Betrachters.

Der Betrachter sieht ein virtuelles Bild VB, welches sich außerhalb des Kraftfahrzeugs oberhalb der Motorhaube oder sogar vor dem Kraftfahrzeug befindet. Durch das Zusammenwirken von Optikeinheit 2 und Spiegeleinheit 3 ist das virtuelle Bild VB eine vergrößerte Darstellung des vom Anzeigeelement 11 angezeigten Bildes. Hier sind symbolisch eine Geschwindigkeitsbegrenzung, die aktuelle Fahrzeuggeschwindigkeit sowie Navigationsanweisungen dargestellt. So lange sich das Auge 61 innerhalb der durch ein Rechteck angedeuteten Eyebox 62 befindet, sind alle Elemente des virtuellen Bildes für das Auge 61 sichtbar. Befindet sich das Auge 61 außerhalb der Eyebox 62, so ist das virtuelle Bild VB für den Betrachter nur noch teilweise oder gar nicht sichtbar. Je größer die Eyebox 62 ist, desto weniger eingeschränkt ist der Betrachter bei der Wahl seiner Sitzposition.

Die Krümmung des gekrümmten Spiegels 22 ist an die Krümmung der Windschutzscheibe 31 angepasst und sorgt dafür, dass die Bildverzeichnung über die gesamte Eyebox 62 stabil ist. Der gekrümmte Spiegel 22 ist mittels einer Lagerung 221 drehbar gelagert. Die dadurch ermöglichte Drehung des gekrümmten Spiegels 22 ermöglicht ein Verschieben der Eyebox 62 und somit eine Anpassung der Position der Eyebox 62 an die Position des Auges 61. Der Faltspiegel 21 dient dazu, dass der vom Strahlenbündel SB1 zurückgelegte Weg zwischen Anzeigeelement 11 und gekrümmtem Spiegel 22 lang ist, und gleichzeitig die Optikeinheit 2 dennoch kompakt ausfällt. Die Optikeinheit 2 wird durch eine transparente Abdeckung 23 gegen die Umgebung abgegrenzt. Die optischen Elemente der Optikeinheit 2 sind somit beispielsweise gegen im Innenraum des Fahrzeugs befindlichen Staub geschützt. Auf der Abdeckung 23 befindet sich weiterhin eine optische Folie 24 oder eine Beschichtung, die einfallendes Sonnenlicht SL daran hindern soll, über die Spiegel 21, 22 auf das Anzeigeelement 11 zu gelangen. Dieses könnte sonst durch eine dabei auftretende Wärmeentwicklung vorübergehend oder auch dauerhaft geschädigt werden. Um dies zu verhindern, wird beispielsweise ein Infrarotanteil des Sonnenlichts SL mittels der optischen Folie 24 ausgefiltert. Ein Blendschutz 25 dient dazu, von vorne einfallendes Licht abzuschatten, sodass es nicht von der Abdeckung 23 in Richtung Windschutzscheibe 31 reflektiert wird, was eine Blendung des Betrachters hervorrufen könnte. Außer dem Sonnenlicht SL kann auch das Licht einer anderen Störlichtquelle 64 auf das Anzeigeelement 11 gelangen.

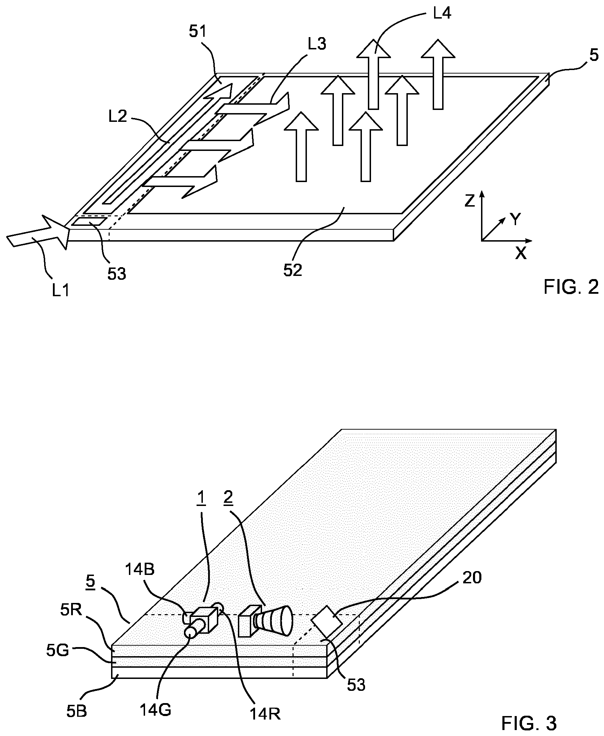

Fig. 2 zeigt in schematischer räumlicher Darstellung einen Lichtwellenleiter 5 mit zweidimensionaler Vergrößerung. Im unteren linken Bereich erkennt man ein Einkoppelhologramm 53, mittels dessen von einer nicht dargestellten bildgebenden Einheit kommendes Licht L1 in den Lichtwellenleiter 5 eingekoppelt wird. In diesem breitet es sich in der Zeichnung nach rechts oben aus, entsprechend dem Pfeil L2. In diesem Bereich des Lichtwellenleiters 5 befindet sich ein Falthologramm 51, das ähnlich wie viele hintereinander angeordnete teildurchlässige Spiegel wirkt, und ein in Y-Richtung verbreitertes, sich in X-Richtung ausbreitendes Lichtbündel erzeugt. Dies ist durch drei Pfeile L3 angedeutet. In dem sich in der Abbildung nach rechts erstreckenden Teil des Lichtwellenleiters 5 befindet sich ein Auskoppelhologramm 52, welches ebenfalls ähnlich wie viele hintereinander angeordnete teildurchlässige Spiegel wirkt, und durch Pfeile L4 angedeutet Licht in Z-Richtung nach oben aus dem Lichtwellenleiter 5 auskoppelt. Hierbei erfolgt eine Verbreiterung in X-Richtung, sodass das ursprüngliche einfallende Lichtbündel L1 als in zwei Dimensionen vergrößertes Lichtbündel L4 den Lichtwellenleiter 5 verlässt.

Fig. 3 zeigt in räumlicher Darstellung ein Head-Up-Display mit drei Lichtwellenleitern 5R, 5G, 5B, die übereinanderliegend angeordnet sind und für je eine Elementarfarbe Rot, Grün und Blau stehen. Sie bilden gemeinsam den Lichtwellenleiter 5. Die in dem Lichtwellenleiter 5 vorhandenen Hologramme 51, 52, 53 sind wellenlängenabhängig, sodass jeweils ein Lichtwellenleiter 5R, 5G, 5B für eine der Elementarfarben verwendet wird. Oberhalb des Lichtwellenleiters 5 sind ein Bildgenerator 1 und eine Optikeinheit 2 dargestellt. Die Optikeinheit 2 weist einen Spiegel 20 auf, mittels dessen das vom Bildgenerator 1 erzeugte und von der Optikeinheit 2 geformte Licht in Richtung des jeweiligen Einkoppelhologramms 53 umgelenkt wird. Der Bildgenerator 1 weist drei Lichtquellen 14R, 14G, 14B für die drei Elementarfarben auf. Man erkennt, dass die gesamte dargestellte Einheit eine im Vergleich zu ihrer lichtabstrahlenden Fläche geringe Gesamtbauhöhe aufweist.

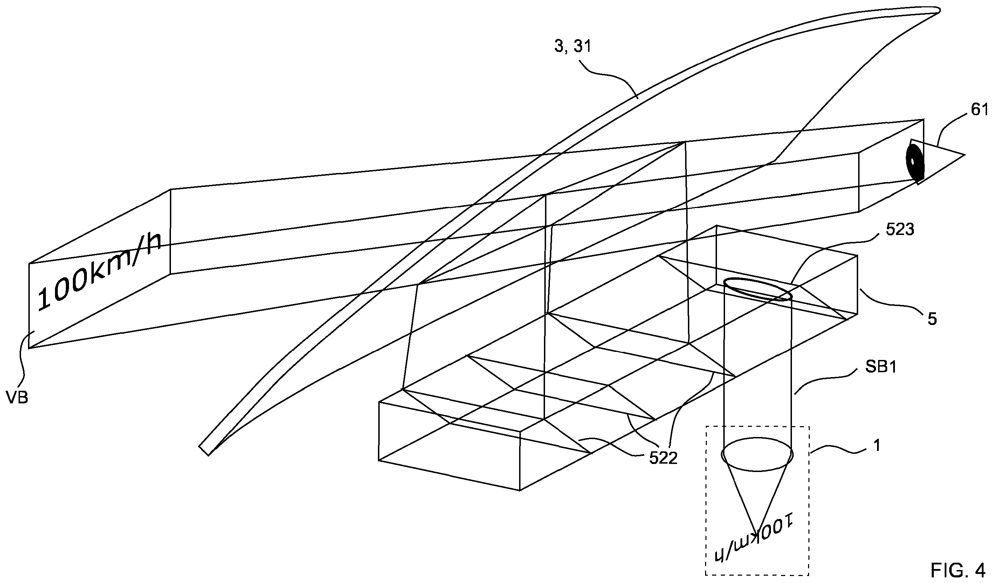

Fig. 4 zeigt ein Head-Up-Display in einem Kraftfahrzeug ähnlich zu Fig. 1, hier allerdings in räumlicher Darstellung und mit einem Lichtwellenleiter 5. Man erkennt den schematisch angedeuteten Bildgenerator 1, der ein paralleles Strahlenbündel SB1 erzeugt, welches mittels der Spiegelebene 523 in den Lichtwellenleiter 5 eingekoppelt wird. Die Optikeinheit ist der Einfachheit halber nicht dargestellt. Mehrere Spiegelebenen 522 reflektieren jeweils einen Teil des auf sie auftreffenden Lichts Richtung Windschutzscheibe 31, der Spiegeleinheit 3. Von dieser wird das Licht Richtung Auge 61 reflektiert. Der Betrachter sieht ein virtuelles Bild VB über der Motorhaube bzw. in noch weiterer Entfernung vor dem Kraftfahrzeug.

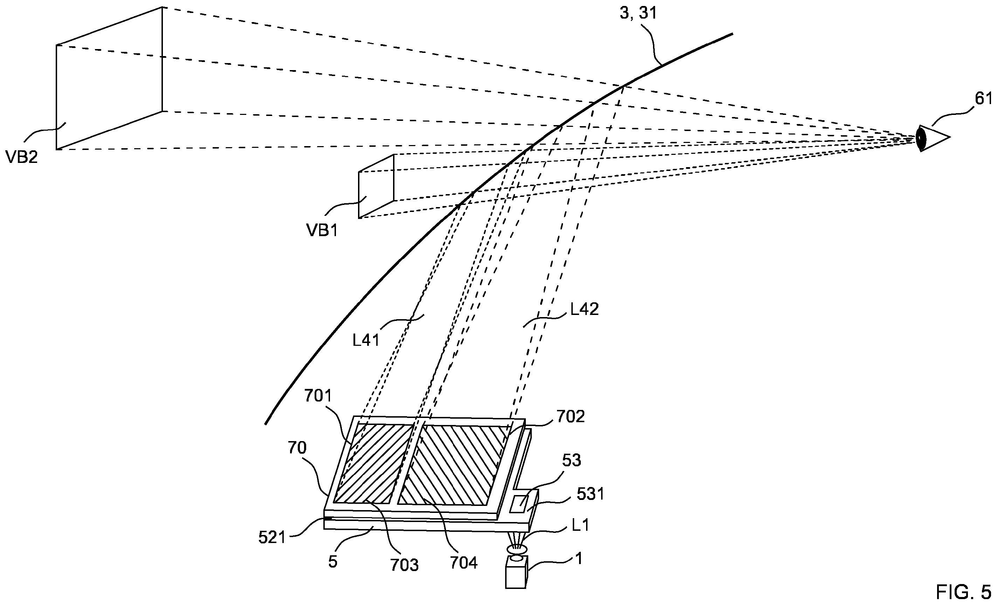

Fig. 5 zeigt schematisch eine erste Ausführungsform eines erfindungsgemäßen Head-Up-Displays. Man erkennt die bildgebende Einheit 1 und das von dieser abgegebene Licht L1, welches durch das Einkoppelhologramm 53 in einem Einkoppelbereich 531 des Lichtwellenleiters 5 in diesen eingekoppelt wird. Oberhalb des Auskoppelbereichs 521 des Lichtwellenleiters 5 ist ein optisches Element 70 angeordnet, in das beispielsweise eine diffraktive Struktur eingebracht ist. Das optische Element 70 weist in der dargestellten Ausführungsform zwei Teilbereiche 701, 702 auf, die das sie passierende Licht unterschiedlich optisch beeinflussen. Man erkennt zwei Teillichtbündel L41, L42, die zu zwei virtuellen Bildern VB1, VB2 führen, die sich in unterschiedlich weiter Entfernung vor der als Spiegeleinheit 3 wirkenden Windschutzscheibe 31 befinden. Ein Betrachter 61 sieht somit zwei sich in unterschiedlichem Abstand vor der Eyebox befindliche Anzeigen. Vorzugsweise ist das näher an der Eyebox befindliche virtuelle Bild VB1 zur Anzeige von Fahrzeuginformationen vorgesehen, wie z.B. die aktuelle Geschwindigkeit, die Motordrehzahl, o.ä. Das weiter von der Eyebox entfernte virtuelle Bild VB2 kann dafür vorgesehen sein, mit der Fahrzeugumgebung überlagerte Informationen darzustellen, beispielsweise Richtungspfeile einer Navigationsanweisung direkt auf der Fahrbahn oder andere Augmented-Reality-Informationen. Die zwei Teilbereiche 701, 702 weisen in diesem Beispiel Teilstrukturen 703, 704 auf, die nicht überlappen.

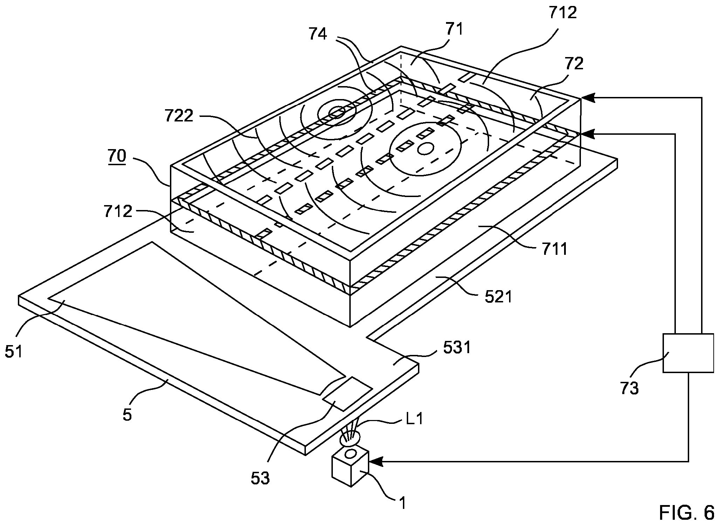

Fig. 6 zeigt schematisch eine zweite Ausführungsform eines erfindungsgemäßen Head-Up-Displays. Man erkennt wieder die bildgebende Einheit 1, das von ihr abgegebene Licht L1, den Lichtwellenleiter 5 und das optische Element 70. Dieses besteht hier aus zwei nebeneinander angeordneten Volumenhologrammen 71, 72, welche beide schaltbar sind. Zu diesem Zweck sind Elektroden 74 vorgesehen, die das jeweilige Volumenhologramm 71, 72 zwischen einem aktiven und einem inaktiven Zustand hin- und herschalten können. Dazu werden sie von einer Steuereinheit 73 geeignet angesteuert. Man erkennt die zu einem Zeitpunkt in sich nicht überlappenden Teilbereichen 711, 721 befindlichen aktiv geschalteten Hologrammstrukturen 712, 722. Diese sind mittels teilkreisförmiger Linien angedeutet. Die Steuereinheit 73 steuert auch die bildgebende Einheit 1 so an, dass das von dieser erzeugte Bild synchron mit den geschalteten Volumenhologrammen 71, 72 geschaltet wird. Sind noch weitere Volumenhologramme vorhanden, so sind diese vorteilhafterweise auf unterschiedliche Abstände eingestellt und werden synchron mit dem gewünschten Abstand der darzustellenden Information geschaltet. So lassen sich, unter Umständen nicht gleichzeitig, aber zumindest nacheinander oder sich verändernd virtuelle Bilder in unterschiedlichen Abständen darstellen. Bei ausreichend kurzen Schaltzeiten können auch mehrere für den Betrachter quasi gleichzeitig wahrnehmbare Bildebenen realisiert werden.

Gemäß einer ersten Variante, die nicht Gegenstand der vorliegenden Erfindung ist, bedeckt jedes der Volumenhologramme 71, 72 die gesamte genutzte Fläche des Auskoppelbereichs 521, d.h. die Volumenhologramme 71, 72 sind in diesem Fall übereinander angeordnet. Die Volumenhologramme 71, 72 werden dann vorzugsweise abwechselnd zueinander oder auch gleichzeitig in unterschiedlichen Kombinationen aktiv geschaltet. Ebenfalls ist es möglich, dass ein erstes Volumenhologramm 71, 72 dauerhaft aktiv und beispielsweise auf eine Projektionsdistanz von 5 m ausgelegt ist. In diesem Fall ist es nicht notwendigerweise schaltbar ausgeführt. Das zweite Volumenholgramm 71, 72 kann dann hinzugeschaltet werden und ist so ausgestaltet, dass es eine Änderung der Projektionsdistanz auf beispielsweise 7.5 m bewirkt. Diese Variante kann auch in der Form umgesetzt werden, dass das zweite Volumenholgramm 71, 72 lediglich in einem Teilbereich mit dem ersten Volumenholgramm 71, 72 überlappt.

Gemäß einer weiteren Variante ist zwischen den nebeneinander angeordneten Volumenhologrammen 71, 72 zumindest ein weiteres streifenförmiges Volumenhologramm angeordnet. Dieses kann in Abhängigkeit von einer Position des Betrachters geschaltet werden, insbesondere in Abhängigkeit von einer vertikalen Kopfposition. Mit dem zumindest einen streifenförmigen Volumenhologramm lassen sich Darstellungsfehler im Grenzbereich zwischen den Volumenhologrammen 71, 72 vermeiden, die gegebenenfalls aus einer Abweichung der vertikalen Kopfposition des Betrachters resultieren.

Gemäß einer anderen Variante ist vorgesehen, nur jeweils einen Teil der Volumenhologramme 71, 72 aktiv zu schalten und den anderen inaktiv. Dazu sind entsprechend geeignete Elektrodengeometrien vorgesehen.

### Bezugszeichenliste

- 1: Bildgenerator/Bildgebende Einheit
- 11: Anzeigeelement
- 14, 14R, 14G, 14B: Lichtquelle

- 2: Optikeinheit
- 20: Spiegel
- 21: Faltspiegel
- 22: Gekrümmter Spiegel
- 221: Lagerung
- 23: Transparente Abdeckung
- 24: Optische Folie
- 25: Blendschutz

- 3: Spiegeleinheit
- 31: Windschutzscheibe

- 5: Lichtwellenleiter
- 51: Falthologramm
- 52: Auskoppelhologramm
- 521: Auskoppelbereich
- 522: Spiegelebene
- 523: Spiegelebene
- 53: Einkoppelhologramm
- 531: Einkoppelbereich

- 61: Auge/ Betrachter
- 62: Eyebox
- 64: Störlichtquelle

- 70: Optisches Element

- 701, 702: Teilbereich
- 703, 704: Teilstruktur
- 71, 72: Volumenhologramm
- 711, 721: Teilbereich
- 712, 722: Hologrammstruktur
- 73: Steuereinheit
- 74: Elektrode

- L1...L4 L41, L42: Licht
- SB1, SB2: Strahlenbündel
- SL: Sonnenlicht
- VB, VB1, VB2: Virtuelles Bild

## Patentansprüche

1. Gerät zum Generieren eines virtuellen Bildes (VB), mit:
- einer bildgebenden Einheit (1) zum Erzeugen eines Bildes;
- einem Lichtwellenleiter (5, 5R, 5G, 5B) zum Aufweiten einer Austrittspupille, wobei der Lichtwellenleiter (5, 5R, 5G, 5B) einen Auskoppelbereich (521) aufweist; und
- einem benachbart zum Auskoppelbereich (521) angeordneten optischen Element (70) zum Beeinflussen einer Projektionsdistanz für zumindest einen Teilbereich des virtuellen Bildes (VB),
**dadurch gekennzeichnet, dass** das optische Element (70) zumindest ein erstes Volumenhologramm (701, 71) und ein zweites Volumenhologramm (702, 72) aufweist, die nebeneinander angeordnet sind, wobei das erste Volumenhologramm (701, 71) eine Projektionsebene im Nahbereich realisiert und das zweite Volumenhologramm (702, 72) eine Projektionsebene im Fernbereich realisiert.

2. Gerät gemäß Anspruch 1, wobei das optische Element (70) zumindest eine holographische Schicht (71, 72) aufweist.

3. Gerät gemäß Anspruch 1 oder 2, wobei die zumindest eine holographische Schicht (71, 72) schaltbar ist.

4. Gerät gemäß Anspruch 3, wobei die zumindest eine holographische Schicht (71, 72) in Abhängigkeit von einer Betrachterposition schaltbar ist.

5. Gerät gemäß Anspruch 3 oder 4, wobei die zumindest eine holographische Schicht (71, 72) durch Flüssigkristalle schaltbare Strukturen aufweist.

6. Gerät gemäß Anspruch 4 oder 5, mit einer Steuereinheit (73) zum synchronisierten Ansteuern der zumindest einen holographischen Schicht (71, 72) und der bildgebenden Einheit (1).

7. Gerät gemäß einem der vorherigen Ansprüche, wobei zwischen den nebeneinander angeordneten Volumenhologrammen zumindest ein weiteres, streifenförmiges Volumenhologramm angeordnet ist, das in Abhängigkeit von einer Betrachterposition schaltbar ist.

8. Gerät gemäß einem der vorherigen Ansprüche, wobei die Projektionsebene im Nahbereich als Anzeigeebene dient und die Projektionsebene im Fernbereich als Augmentierungsebene dient.

9. Fortbewegungsmittel mit einem Gerät gemäß einem der Ansprüche 1 bis 8 zum Generieren eines virtuellen Bildes (VB) für einen Bediener des Fortbewegungsmittels.

## Claims

1. Device for generating a virtual image (VB), comprising:
- a picture-generating unit (1) for generating an image;
- an optical waveguide (5, 5R, 5G, 5B) for expanding an exit pupil, wherein the optical waveguide (5, 5R, 5G, 5B) has a coupling-out region (521); and
- an optical element (70), arranged adjacent to the coupling-out region (521), for influencing a projection distance for at least one partial region of the virtual image (VB),
**characterized in that** the optical element (70) has at least a first volume hologram (701, 71) and a second volume hologram (702, 72), which are arranged side by side, wherein the first volume hologram (701, 71) realizes a projection plane in the near range and the second volume hologram (702, 72) realizes a projection plane in the far range.

2. Device according to Claim 1, wherein the optical element (70) has at least one holographic layer (71, 72).

3. Device according to Claim 1 or 2, wherein the at least one holographic layer (71, 72) is switchable.

4. Device according to Claim 3, wherein the at least one holographic layer (71, 72) is switchable depending on a position of the viewer.

5. Device according to Claim 3 or 4, wherein the at least one holographic layer (71, 72) has structures that are switchable by way of liquid crystals.

6. Device according to Claim 4 or 5, comprising a control unit (73) for the synchronized control of the at least one holographic layer (71, 72) and the image-generating unit (1).

7. Device according to any of the preceding claims, wherein at least one further, strip-shaped volume hologram is arranged between the volume holograms which are arranged side by side, which is switchable depending on a position of the viewer.

8. Device according to any of the preceding claims, wherein the projection plane in the near range serves as a display plane and the projection plane in the far range serves as an augmentation plane.

9. Means of transport comprising a device according to any of Claims 1 to 8 for generating a virtual image (VB) for an operator of the means of transport.

## Revendications

1. Appareil destiné à générer une image virtuelle (VB), comprenant :
- une unité de formation d'image (1) servant à générer une image ;
- un guide d'ondes optiques (5, 5R, 5G, 5B) servant à élargir une pupille de sortie, le guide d'ondes optiques (5, 5R, 5G, 5B) comportant une zone d'extraction (521) ; et
- un élément optique (70) servant à exercer une influence sur une distance de projection pour au moins une zone partielle de l'image virtuelle (VB), disposé au voisinage de la zone d'extraction (521),
**caractérisé en ce que** l'élément optique (70) comprend au moins un premier hologramme volumique (701, 71) et un second hologramme volumique (702, 72) qui sont disposés côte à côte, le premier hologramme volumique (701, 71) réalisant un plan de projection en champ proche et le second hologramme volumique (702, 72) réalisant un plan de projection en champ lointain.

2. Appareil selon la revendication 1, dans lequel l'élément optique (70) comporte au moins une couche holographique (71, 72).

3. Appareil selon la revendication 1 ou 2, dans lequel ladite au moins une couche holographique (71, 72) est commutable.

4. Appareil selon la revendication 3, dans lequel ladite au moins une couche holographique (71, 72) est commutable en fonction d'une position de l'observateur.

5. Appareil selon la revendication 3 ou 4, dans lequel ladite au moins une couche holographique (71, 72) comporte des structures commutables au moyen de cristaux liquides.

6. Appareil selon la revendication 4 ou 5, comprenant une unité de commande (73) servant à commander de manière synchronisée ladite au moins une couche holographique (71, 72) et l'unité de formation d'image (1).

7. Appareil selon l'une quelconque des revendications précédentes, dans lequel au moins un autre hologramme volumique en forme de bande est disposé entre les hologrammes volumiques disposés côte à côte et est commutable en fonction d'une position de l'observateur.

8. Appareil selon l'une quelconque des revendications précédentes, dans lequel le plan de projection en champ proche joue le rôle de plan d'affichage et le plan de projection en champ lointain joue le rôle de plan d'augmentation.

9. Moyen de locomotion comprenant un appareil selon l'une quelconque des revendications 1 à 8, servant à générer une image virtuelle (VB) destinée à un opérateur du moyen de locomotion.
